Europäisches Patentamt

European Patent Office

Office européen des brevets

(19)

(11)  EP 1 464 029 B1

(12)  **EUROPEAN PATENT SPECIFICATION**

(45) Date of publication and mention
of the grant of the patent:
**02.11.2006 Bulletin 2006/44**

(51) Int Cl.:
*G06K 9/60* (2006.01)     *G06K 9/00* (2006.01)

(21) Application number: **02792128.7**

(86) International application number:
**PCT/SE2002/002230**

(22) Date of filing: **05.12.2002**

(87) International publication number:
**WO 2003/052675 (26.06.2003 Gazette 2003/26)**

(54) **Fingerprint acquisition with different types of sensors**

Fingerabdruckerfassung mit unterschiedlichen Sensortypen

Acquisition d'empreinte digitale avec differents types de capteurs

(84) Designated Contracting States:
**AT BE BG CH CY CZ DE DK EE ES FI FR GB GR
IE IT LI LU MC NL PT SE SI SK TR**

(30) Priority: **18.12.2001 SE 0104265**

(43) Date of publication of application:
**06.10.2004 Bulletin 2004/41**

(73) Proprietors:
• **Philipson, Lars
222 21 Lund (SE)**
• **Gustafsson, Sven G.
427 36 Billdal (SE)**

(72) Inventors:
• **Philipson, Lars
222 21 Lund (SE)**
• **Gustafsson, Sven G.
427 36 Billdal (SE)**

(74) Representative: **Boberg, Nils Gunnar Erik
Hansson Thyresson Patentbyrå AB
Box 73
201 20 Malmö (SE)**

(56) References cited:
**EP-A2- 0 372 762          EP-A2- 0 735 502
WO-A1-98/58342          US-A- 6 091 837
US-B1- 6 282 303**

**Description**

BACKGROUND OF THE INVENTION

Finger patterns have been used for a long time in forensic applications as an aid in identifying individuals. More recently characteristics derived from the papillary finger pattern itself have been utilized in technical authentication and identification systems. The two applications are distinctly different albeit with some relations. Finger-pattern-based authentication/identification may be applied, for instance in transaction systems and computer or building access control systems. Potentially, finger patterns may replace or complement ID cards, PIN codes, and passwords. Any such system requires a good and reliable technology for finger pattern acquisition.

PRIOR ART

There are several technologies available presently for acquiring digital finger patterns directly from the finger. The oldest ones are based on optical methods and camera sensors. They can give fairly good pictures but are bulky, sensitive to contamination and subject to forgery. Then there are the electrostatic sensors where special-purpose, finger-tip-sized silicon chips have been designed to measure capacitive properties in a grid pattern over the fingertip area. They can give good pictures but are sensitive to surface scratches and ESD (Electrostatic Discharge).

In a third technology a silicon line sensor is used to measure the thermal conductivity or more precisely its variation in time. This requires a time change in heat flow between the finger and the sensor demanding the finger to move relative to the sensor, which is the reason for the line shape. The finger is scanned over the sensor and a number of snapshot stripes are collected. From these a microprocessor with appropriate software can reconstruct the entire finger pattern. Such thermal sensors are small and can produce very good pictures. However, the requirement of a certain temperature difference between the finger and a sensor is a drawback, in particular in mobile applications where the sensor is integrated in a unit that is often carried in thermal contact with the body. Local heating of the sensor can be applied to compensate for this, at the cost of increased energy consumption. Lately, line versions of capacitive sensors have been developed. The reduced size makes the surface less exposed to mechanical and electrical impacts.

WO 98/58342 discloses a method and an apparatus for measuring structures in a fingerprint. Two or more parallel lines of measuring points are used to obtain a segmented two-dimensional representation of the characteristics of the surface of the fingerprint. The surface to be measured is moved in a perpendicular direction relative to a line of sensors forming the measuring points. The sensors may be of different kinds, such as pressure sensors, temperature sensors or preferably electrical conductors.

Independent of which method is used, an algorithm is then applied to the digital finger pattern in order to verify or identify it using a database containing one or several finger pattern references. The success of this procedure depends on the quality of the captured pattern image. With all sensor types, the limited or poor image quality under realistic conditions is the major problem in current finger pattern applications.

SUMMARY OF THE INVENTION

This invention addresses the problem of poor image quality in finger pattern systems. An object of the present invention is to provide better images than with existing methods. By scanning the finger over two or more different line sensors of a sensor arrangement in one operation, two or more different images will be acquired. One of the sensors may, for instance, be capacitive and another thermal. Due to differences in the characteristics of the sensors, the imperfections in the images will also be different. The selectivity of the sensor arrangement will be further improved by using more than two sensors. By combining the images, a new one can be obtained that is better than either of the originals. Pixels obtained from areas outside the finger pattern are marked as void and are not used during the following calculations.

An image is read as sub-images or image stripes from the line sensors and the sub-images are arranged in relation to each other to form a complete image of a finger pattern. A micro controller can be used to combine the sub-images by calculating the correlation between at least two consecutive sub-images, such as the latest sub-image and one or several previous sub-images. The cross-correlation coefficient is the standard measure of correlation. However the more computationally efficient sum of squared differences has proven to give sufficient results.

BRIEF DESCRIPTION OF THE DRAWINGS

The invention will now be described in more detail with reference to specific embodiments thereof shown on the accompanying drawings.

Fig. 1    is a schematic block diagram showing one embodiment of a dual sensor system in accordance with the invention,
Fig. 2    shows a three-sensor arrangement,
Fig. 3    shows an alternative embodiment,
Fig. 4    shows a further alternative embodiment of a two-sensor arrangement with distributed sensors,
Fig. 5    shows an image stripe obtained from one sensor,
Fig. 6    shows selection of a central part of the image strip in Fig. 2,
Fig. 7    illustrates a method of positioning image strips in relation to each other,
Fig. 8    shows a correlation map indicating the positioning of a subsequent image strip,
Fig. 9    illustrates the procedure for obtaining a full finger pattern from a dual sensor, and
Fig. 10   shows two 3x3 Sobel masks that can be used for enhancing lines in the x direction and in the y direction.

DETAILED DESCRIPTION OF A PREFERRED EMBODIMENT

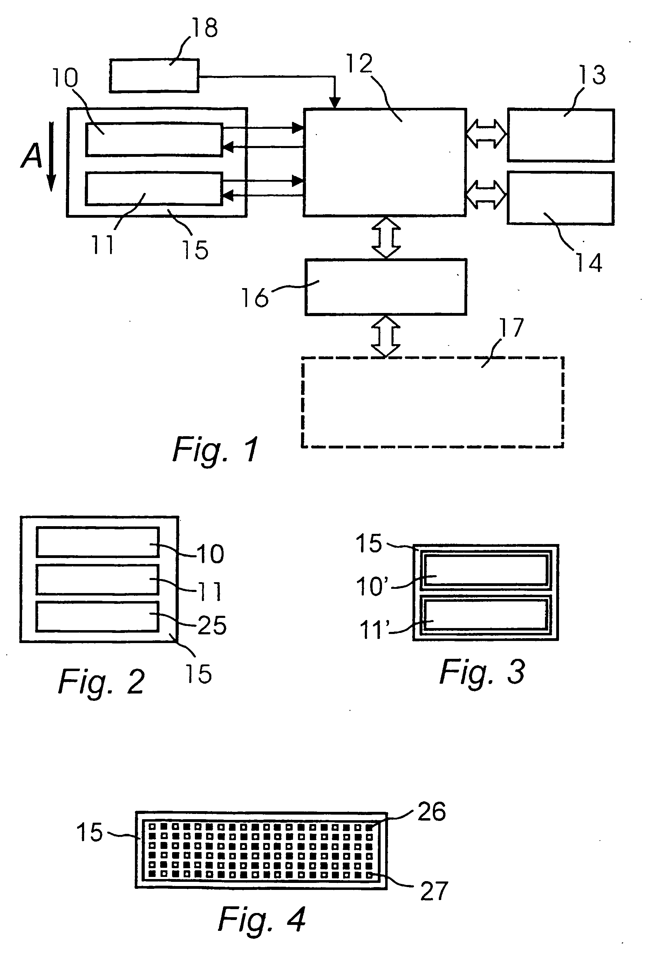

As shown in Fig. 1 a dual sensor arrangement in accordance with the invention includes two sensors. A first line sensor 10 is mounted adjacent to a second line sensor 11. The first and second sensors are based on different technologies and each has one or several rows of sensor cells. A finger is moved consecutively over first and second sensors as indicated by arrow A. The order in which the finger passes the two sensors may depend on various factors, for instance the mechanical layout of the device in which the sensors are integrated. In a preferred embodiment the first sensor is capacitive and the second sensor is a thermal sensor. The sensors are arranged on a carrier 15. They can be separate sensors, but in a preferred embodiment both are integrated on one piece of silicon, which also forms the carrier 15.

The signal from the sensors can be analog or digital. In the case of digital output an A/D converter is integrated on the chip, and in the analog case this has to be added as a separate component (not shown). In both cases the sensor also uses a number of extra signals for controlling the acquisition and a synchronization of the readout. A micro controller 12 is used to collect image data and then also to reconstruct separate images and combine them to a final finger pattern. In the embodiment shown in Fig. 1 the micro controller 12 is connected to a working memory 13, such as a RAM, and to a storage memory 14, such as a flash memory. This micro controller may also be used for matching the finger patterns with references in a database. In the block diagram the database resides in the flash memory 14. The sensors could be integrated together with the micro controller and memories in a small portable unit or could be mounted separate with the rest of the electronic parts at a distance, connected with a cable. The micro controller could be replaced by a personal computer or similar standard piece of computing equipment. An interface 16 connects the dual sensor arrangement to an exterior system 17 shown by dashed lines in Fig. 1.

In order to save energy, the heating of the thermal sensor 11 should be restricted to the time period when it is used. This can be achieved either by using the first sensor 10 in a separate mode to sense the presence of a finger or by adding a mechanical switch 18 sensing the pressure on the sensor. When a mechanical switch 18 is used it is preferably arranged so as to be touched by the finger before any of the sensors are touched. These arrangements are optional and dependent on the need for heating the thermal sensor and the requirement on power consumption.

The readout of image stripes from the sensors is done with a certain repetition rate sufficiently high to cover the entire finger pattern even if the finger is moved rapidly. Ideally, the two sensors should be synchronized so that frames are read out form both of them at the same time. Second best is when the repetition rate is the same but they are not synchronized. If the repetition rates for the two sensors are different this has to be compensated for in the subsequent calculations, which will require more computing power and introduce some interpolation errors. In the preferred embodiment the sensors are synchronized.

In the embodiment shown in Fig. 2 the sensor arrangement includes three sensors. In addition to a first sensor 10 and a second sensor 11 also a third sensor 25 is provided on the carrier 15. Preferably all three sensors are different, so as to provide a more composite signal. It is possible also to use two sensors that are based on the same technique while the third sensor is different.

In Fig. 3 a further embodiment of the sensor arrangements is shown. A first sensor 10' and a second sensor 11' are provided on separate chips. The chips are mounted side by side and supported on the carrier 15. In this embodiment it is possible to use different substrates in the sensors, which may improve the selectivity even further.

In the embodiment shown in Fig. 4 the sensor arrangement comprises a plurality of sensor elements. A first set of sensor elements 26 forms together the first sensor, and a second set of sensor elements 27 forms together the second sensor. Sensor elements of first and second set are distributed and mixed over the surface of the carrier 15. Each sensor element can be formed as a separate chip, but in a preferred embodiment all sensor elements are integrated in one chip. An advantage with a sensor arrangement in accordance with Fig. 4 is that input data from each sensor will be available simultaneously.

For either type of sensor arrangement each sensor or sensor element can be formed from different materials and substrates. Preferably, solid-state sensors are used, but in some embodiments instead polymer based sensors are used. Also so-called 3-5 compounds such as gallium arsenide can be used.

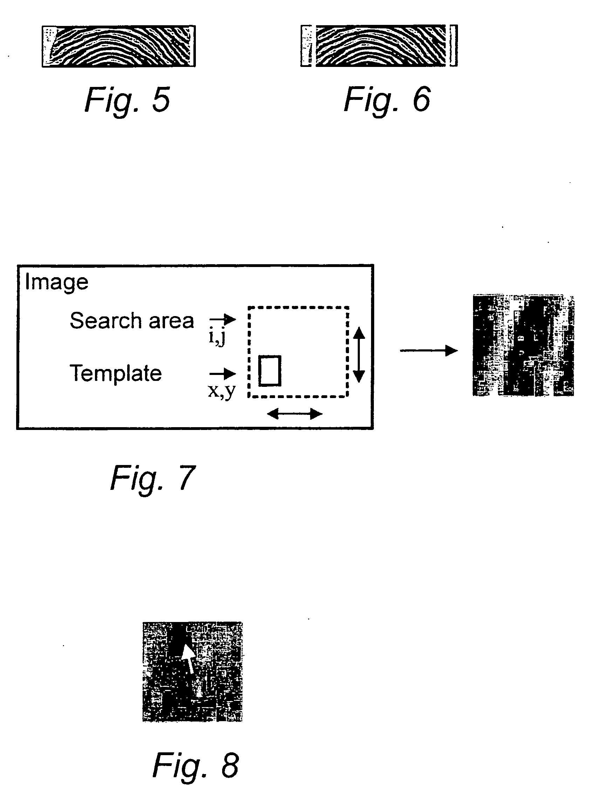

Fig. 5 shows one raw sub-image or frame obtained from one of the sensors. The size of the sub-image corresponds to the size of the sensor. The sub-image is used in calculations for creating a full finger pattern. In practice, the calculations are complicated. For instance, each frame is first evaluated in order to decide if it is good enough to be used, and to determine what portion of the frame that contains finger pattern information. Fig. 6 shows an example of how only the central part of the frame is considered being part of a finger pattern.

When the image frames arrive at the micro controller the next step is to combine them into a full pattern. This involves calculation of the correlation between the latest frame and one or several previous frames. The cross-correlation coefficient is the standard measure of correlation. However the more computationally efficient sum of squared differences has proven to give sufficient results.

Fig. 7 illustrates a method where two consecutive images are used for the correlation. From the first one a template is selected. In the other image one or several search areas are selected and the correlation algorithm is applied to each one of them. The result of each calculation is a correlation map where dark areas correspond to high correlation and light areas to low correlation. Fig. 7 illustrates how the computation is performed according to the following formula.

$$c_{i,j} = \sum_{x,y} (f(x,y) - g(x+i, y+j))^2 \qquad (1)$$

Where $f(x, y)$ is a NxN template from image(n) and $g(x, y)$ is a NxN area in image(n+1). The sum of squared differences measures dissimilarity. In a map calculated with this measure, dark areas correspond to high correlation and the highlighted areas to low correlation.

This results in a two-dimensional correlation map as shown in Fig. 8, where dark areas correspond to high correlation and light areas to low correlation, from which a displacement vector can be calculated, indicating the length and direction of finger movement between the latest frames. The displacement vector is found in the displacement map as the vector from the center to the correlation maximum (darkest pixel). The frames are placed accordingly relative to each other, and mean values of all pixels are calculated in order to arrive at an entire finger pattern.

If the number of pixels of the two sensors differs, a re-sampling has to be applied. In the next step, the two images are combined into one by taking mean values, pixel by pixel, but excluding all pixels outside the good areas. For positions where only one value is available this value is used. An alternative method is based on the original frames placed according to the displacement vectors relative to a matrix with the same resolution as the final finger pattern image. Each pixel value is then calculated by interpolation over the closest data points.

Typically also some image enhancement algorithms are applied. This procedure is performed for each sensor separately. However, information about the displacement vectors also from the other sensor can be used to evaluate and possibly correct the result from the correlation.

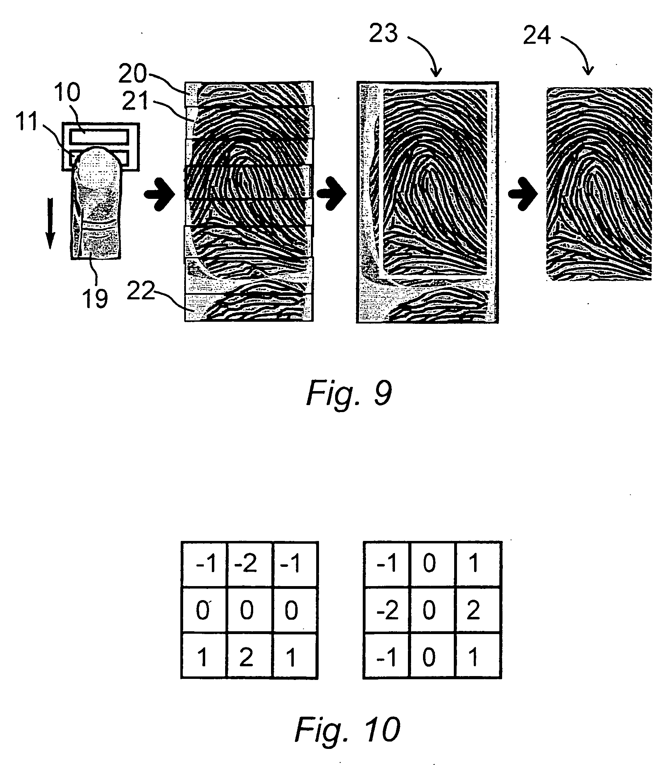

Fig. 9 illustrates the procedure for obtaining a full finger pattern from one sensor. A finger 19 is moved over and past the first sensor 10 and the second sensor 11. During movement of the finger a plurality of image strips are recorded. A first image strip 20 is obtained from the tip of the finger and a second image strip 21 is obtained thereafter. As shown in Fig. 9 the image strips may be displaced in relation to each other. Such a displacement is corrected as described above with reference to Fig. 7 and Fig. 8.

After obtaining a last image strip 22 all image strips are combined into a full finger pattern 23 as interpreted by one sensor. As shown in Fig. 9 the full finger pattern 23 includes also sections having no or less significant information. These sections are cut off and a center finger pattern area 24 is maintained and used for the combination with a similar finger pattern area obtained from the other sensor.

Before the actual calculations start some pre-processing may be needed. Here only a few examples are given. High-pass spatial filtering, for instance by convolution with Sobel masks, may be used for estimating image quality. Fig. 10 shows two 3x3 Sobel masks, one enhancing lines in the x direction and the other in the y direction.

Pixel value histograms are useful when selecting templates with odd properties. Variance analysis according to the following formula (2) may be used for detection of finger pattern area.

$$\sigma^2 = \frac{\sum_{i=1}^{n} (X_i - \overline{X})^2}{n} \qquad (2)$$

The following is an example of calculations step by step leading from the raw sensor data to the final finger pattern image. Several pre-processing steps can be taken. Examples are:

- Detection of finger pattern area (several methods, e.g. using Sobel derivatives or variance),
- Pixels outside finger pattern area marked as void
- Calculation of image quality index (several methods, e.g. using Sobel derivatives or variance)
- Template extraction (areas with odd properties are preferred, larger templates require more computations)

In connection with evaluation of translation vectors the following aspects should be observed:

- Two time series of translation vectors are available
- Projection onto an axis perpendicular to the sensor lines
- Two translation curves aligned to a common time axis
- Interpolation to a common sample frequency (one of the original ones or a new one)
- Calculation of mean translation curve by regression
- Calculation of measured data point deviation from mean translation curve
- Potentially bad data points indicated by median filter
- Bad data points flagged by comparison in pairs of data point errors from both sensors

During final image composition the following aspects are of importance:

- For each frame the following data are available: image, finger pattern area, image quality index, translation vector, bad vector flag
- These make up two pairs of time series
- Based on image quality index and bad vector flag some images are discarded
- Excessive good images are discarded based on image quality
- The rest of the images are placed according to their respective translation vectors on a virtual grid
- Each pixel in the virtual grid is calculated based on the closest raw image pixels

It may be appropriate to consider post-processing steps, such as re-sampling (if required) and filtering (if required). In order to reduce the computational intensity approximate versions of the algorithms may be used, often with only a small effect on the quality of the results.

## Claims

1. A method for acquiring a finger pattern, including the steps of:

    a) sensing a first set of characteristics of a line segment of the tip of a finger using a first line sensor (10, 10') of a first technology,
    b) relatively moving the tip of the finger and the first line sensor to obtain a plurality of line segments,
    c) storing data corresponding to said line segments as first sub-images and
    d) combining data of a plurality of sub-images to form a representation of at least a section of the finger pattern,

    *characterised* **by** the following steps:

    e) sensing at least a second set of characteristics of a line segment of the tip of a finger using at least a second line sensor (11, 11') of a second technology, said at least second set of characteristics being different from said first set of characteristics,
    f) relatively moving the tip of the finger and at least one second line sensor,
    g) storing data corresponding to said line segments as second sub-images, the second sub images being different from the first sub images, and
    h) combining a first representation of at least a section of the finger pattern based on the first set of characteristics with at least a second representation of at least a section of the finger pattern based on the second set of characteristics to form a representation of the finger pattern.

2. A method as claimed in claim 1, also including the step of combining sub-images retrieved from first sensor by calculating a correlation value between the latest retrieved sub-image and at least one previous correlation value retrieved sub-image and displacing the sub-images in dependence of the correlation value.

3. A method as claimed in claim 1, also including the steps of selecting a template from a first of two consecutive sub-images, selecting at least one search area from a second sub-image of said two consecutive sub-images, calculating a correlation map where dark pixels correspond to high correlation and light pixels correspond to low correlation, calculating a displacement vector as a vector from the centre of the template to the darkest pixel, and displacing the second sub-image in relation to the first sub-image as set out by the displacement vector.

4. A method as claimed in claim 3, also including the step of calculating the correlation map $c_{i,j}$ with the formula

$$c_{i,j} = \sum_{x,y} (f(x,y) - g(x+i, y+j))^2$$

where $f(x, y)$ is a NxN template from sub-image(n) and $g(x, y)$ is a NxN area in image(n+1).

5. A method as claimed in claim 4, also including the step of obtaining line segments from the first line sensor in synchronization with obtaining line segments from the second line sensor.

6. A method as claimed in claim 4, also including the step of obtaining line segments from the first line sensor at the same repetition rate as when obtaining line segments from the second line sensor.

7. A finger pattern acquiring device including a first line sensor (10, 10') of a first technology for sensing a first set of characteristics of a line segment of the tip of a finger(19), memory means (13; 14) for storing data corresponding to line segments obtained when the tip of a finger and the first line sensor are moved in relation to each other, and a control unit (12) operatively connected to said first line sensor (10, 10') and said memory means (13; 14) for combining data of a plurality of line segments to form a representation of at least a section the finger pattern, *characterised* **by** at least a second line sensor (11, 11') of a second technology for sensing a second set of characteristics of a line segment of the tip of a finger, said at least second line sensor being operatively connected to said control unit (12) and said second set of characteristics being different from said first set of characteristics.

8. A device as claimed in claim 7, wherein two line sensors are used and one or the other of the first line sensor and the second line sensor is a thermal sensor and the remaining sensor is a capacitive sensor.

9. A device as claimed in claim 7, wherein two line sensors are used and the first line sensor and the second line sensor are integrated on a single silicon chip.

10. A device as claimed in claim 7, wherein two line sensors are used and the first line sensor and the second line sensor are integrated on a single silicon chip together with a micro controller and memory means.

11. A device as claimed in claim 7, wherein the first line sensor is a thermal sensor that is thermally connected to a heating means, a second line sensor is operatively connected to said heating means and wherein the heating means are activated by a finger tip engaging the second line sensor.

12. A device as claimed in claim 7, wherein the first line sensor is a thermal sensor that is thermally connected to a heating means and wherein a pressure sensitive device is operatively connected to the heating means for activating the heating means when a finger tip exerts a pressure on the pressure sensitive device.

**Patentansprüche**

1. Verfahren zum Aufnehmen von Fingerabdruckmustern, welches die folgenden Schritte enthält:

   a) Erfassen eines ersten Satzes von Charakteristiken eines Liniensegments einer Fingerspitze unter Verwendung eines ersten Liniensensors (10, 10') einer ersten Technologie,
   b) relatives Bewegen der Fingerspitze und des ersten Liniensensors um eine Mehrzahl von Liniensegmenten zu erhalten,

c) Speichern von Daten, welche den Liniensegmenten entsprechen, als erste Unterbilder und

d) Kombinieren von Daten einer Mehrzahl von Unterbildern um eine Abbildung von zumindest einem Abschnitt des Fingerabdruckmusters zu bilden, **gekennzeichnet durch** die folgenden Schritte:

e) Erfassen von zumindest einem zweiten Satz von Charakteristiken eines Liniensegments einer Fingerspitze unter Verwendung von zumindest einem zweiten Liniensensor (11, 11') einer zweiten Technologie, wobei der zumindest zweite Satz Charakteristiken sich von dem ersten Satz Charakteristiken unterscheidet,

f) relatives Bewegen der Fingerspitze und zumindest eines zweiten Liniensensors,

g) Speichern von Daten, die den Liniensegmenten entsprechen, als zweite Unterbilder, wobei sich die zweiten Unterbilder von den ersten Unterbildern unterscheiden, und

h) Kombinieren einer ersten Abbildung von zumindest einem Abschnitt des Fingerabdrucks auf Basis des ersten Satzes Charakteristiken mit zumindest einer zweiten Darstellung von zumindest einem Abschnitt des Fingerabdruckmusters auf Basis eines zweiten Satzes Charakteristiken, um eine Darstellung des Fingerabdruckmusters zu bilden.

2. Verfahren nach Anspruch 1, welches auch den Schritt des Kombinierens von Unterbildern enthält, welche von dem ersten Sensor durch Berechnung eines Korrelationswerts zwischen dem letzten aufgenommenen Unterbild und zumindest einem mit einem vorhergehenden Korrelationswert aufgenommenen Unterbild berechnet werden, und Austauschen der Unterbilder in Abhängigkeit von dem Korrelationswert.

3. Verfahren nach Anspruch 1, welches auch die Schritte des Auswählens einer Schablone von einem ersten von zwei aufeinander folgenden Unterbildern enthält, Auswählen von zumindest einem Suchgebiet von einem zweiten Unterbild von den zwei aufeinanderfolgenden Unterbildern, Berechnen einer Korrelationskarte, worin dunkle Pixel hoher Korrelation entsprechen und helle Pixel geringer Korrelation entsprechen, Berechnen eines Verschiebungsvektors als Vektor vom Zentrum der Schablone zu dem dunkelsten Pixel, und Verschieben des zweiten Unterbildes in Bezug auf das erste Unterbild, wie von dem Verschiebungsvektor angezeigt.

4. Verfahren nach Anspruch 3, welches auch den Schritt des Berechnens der Korrelationskarte $c_{i,j}$ mit der Formel

$$c_{i,j} = \sum_{x,y} (f(x,y) - g(x+i, y+j))^2$$

enthält, worin f(x,y) eine NxN-Tabelle von einem Unterbild (n) und g(x,y) ein NxN-Gebiet im Bild (n+1) ist.

5. Verfahren nach Anspruch 4, welches auch den Schritt des Erlangens von Liniensegmenten von einem ersten Liniensensor in Synchronisation mit dem Erlangen von Liniensegementen von einem zweiten Liniensensor enthält.

6. Verfahren nach Anspruch 4, welches auch den Schritt des Erlangens von Liniensegmenten von dem ersten Liniensensor mit der gleichen Wiederholungsrate, wie wenn Liniensegmente von dem zweiten Liniensensor erlangt werden, enthält.

7. Fingerabdruckmusteraufnahmevorrichtung, welche einen ersten Liniensensor (10, 10') einer ersten Technologie zum Erfassen eines ersten Satzes von Charakteristiken eines Liniensegments einer Fingerspitze (19) enthält, Speichermittel (13; 14) zur Speicherung von Daten, die Liniensegmenten entsprechen, die erhalten werden, wenn die Spitze eines Fingers und der erste Liniensensor relativ zueinander bewegt werden, und eine Steuerungseinheit (12), die mit dem ersten Sensor (10, 10') und den Speichermitteln (13; 14) operativ verbunden ist, um Daten einer Vielzahl von Liniensegmenten zu kombinieren um eine Darstellung von zumindest einem Abschnitt des Fingerabdruckmusters zu bilden, **gekennzeichnet, durch** zumindest einen zweiten Liniensensor (11, 11') einer zweiten Technologie zum Erfassen eines zweiten Satzes Charakteristiken eines Liniensegments der Spitze eines Fingers, wobei der zumindest zweite Liniensensor mit der Steuerungseinheit (12) operativ verbunden ist und der zweite Satz Charakteristiken sich von dem ersten Satz Charakteristiken unterscheidet.

8. Vorrichtung nach Anspruch 7, wobei zwei Liniensensoren verwendet werden und der eine oder der andere von dem ersten Liniensensor und dem zweiten Liniensensor ein thermischer Sensor ist und der verbleibende Sensor ein kapazitiver Sensor ist.

9. Vorrichtung nach Anspruch 7, wobei zwei Liniensensoren verwendet werden und der erste Liniensensor und der zweite Liniensensor auf einem einzigen Silikonchip integriert sind.

**10.** Vorrichtung nach Anspruch 7, wobei zwei Liniensensoren verwendet werden und der erste Liniensensor und der zweite Liniensensor auf einem einzigen Silikonchip zusammen mit einem Mikrokontroller und Speichermitteln integriert sind.

**11.** Vorrichtung nach Anspruch 7, wobei der erste Liniensensor ein thermischer Sensor ist, der wärmeleitend mit einem Heizungsmittel verbunden ist, ein zweiter Liniensensor mit dem Heizungsmittel operativ verbunden ist, und wobei die Heizungsmittel **dadurch** aktiviert werden, dass eine Fingerspitze den zweiten Liniensensor beaufschlagt.

**12.** Vorrichtung nach Anspruch 7, wobei der erste Liniensensor ein thermischer Sensor ist, der wärmeleitend mit einem Heizungsmittel verbunden ist, und wobei eine druckempfindliche Vorrichtung mit dem Heizungsmittel zur Aktivierung des Heizungsmittels verbunden ist, wenn eine Fingerspitze Druck auf die druckempfindliche Vorrichtung ausübt.

**Revendications**

**1.** Procédé destiné à acquérir une empreinte digitale, comprenant les étapes consistant à :

a) détecter un premier ensemble de caractéristiques d'un segment de ligne du bout d'un doigt en utilisant un premier capteur de ligne (10, 10') d'une première technologie,
b) déplacer relativement le bout du doigt et le premier capteur de ligne afin d'obtenir une pluralité de segments de ligne,
c) stocker les données correspondant auxdits segments de ligne comme premières subimages et
d) combiner les données d'une pluralité de subimages afin de former une représentation d'au moins une partie de l'empreinte digitale,

**caractérisé par** les étapes suivantes :

e) détecter au moins un second ensemble de caractéristiques d'un segment de ligne du bout d'un doigt en utilisant au moins un second capteur de ligne (11, 11') d'une seconde technologie, ledit au moins second ensemble de caractéristiques étant différent dudit premier ensemble de caractéristiques,
f) déplacer relativement le bout du doigt et au moins un second capteur de ligne,
g) stocker les données correspondant auxdits segments de ligne comme secondes subimages, les secondes subimages étant différentes des premières subimages, et
h) combiner une première représentation d'au moins une partie de l'empreinte digitale en se basant sur le premier ensemble de caractéristiques avec au moins une seconde représentation d'au moins une partie de l'empreinte digitale en se basant sur le second ensemble de caractéristiques pour former une représentation de l'empreinte digitale.

**2.** Procédé selon la revendication 1, comprenant également l'étape consistant à combiner les subimages récupérées à partir du premier capteur en calculant une valeur de corrélation entre la dernière subimage récupérée et au moins une subimage récupérée de valeur de corrélation précédente et déplacer les subimages en fonction de la valeur de corrélation.

**3.** Procédé selon la revendication 1, comprenant également les étapes consistant à sélectionner un modèle à partir d'une première des deux subimages consécutives, sélectionner au moins une zone de recherche depuis une seconde subimage desdites deux subimages consécutives, calculer une carte de corrélation où les pixels sombres correspondent à une corrélation élevée et les pixels clairs correspondent à une corrélation basse, calculer un vecteur de déplacement en tant que vecteur partant du centre du modèle jusqu'au pixel le plus sombre, et déplacer la seconde subimage par rapport à la première subimage tel qu'indiqué par le vecteur de déplacement.

**4.** Procédé selon la revendication 3, comprenant également l'étape de calcul de la carte de corrélation $c_{ij}$ avec la formule

$$c_{ij} = \sum_{x,y}(f(x,y) - g(x + i, y + j))^2$$

où $f(x,y)$ est un modèle NxN à partir de la subimage (n) et $g(x,y)$ est une zone NxN dans l'image (n+1).

5. Procédé selon la revendication 4, comprenant également l'étape consistant à obtenir des segments de ligne à partir du premier capteur de ligne en synchronisation avec l'obtention des segments de ligne à partir du second capteur de ligne.

6. Procédé selon la revendication 4, comprenant également l'étape consistant à obtenir des segments de ligne à partir du premier capteur de ligne au même taux de répétition que lors de l'obtention des segments de ligne à partir du second capteur de ligne.

7. Dispositif d'acquisition d'empreinte digitale comprenant un premier capteur de ligne (10, 10') d'une première technologie pour détecter un premier ensemble de caractéristiques d'un segment de ligne du bout d'un doigt (19), des moyens de mémoire (13 ; 14) destinés à stocker les données correspondant aux segments de ligne obtenus lorsque le bout d'un doigt et le premier capteur de ligne se déplacent l'un par rapport à l'autre, et une unité de commande (12) connectée de façon opérationnelle audit premier capteur de ligne (10, 10') et auxdits moyens de mémoire (13 ; 14) pour combiner les données d'une pluralité de segments de ligne afin de former une représentation d'au moins une partie de l'empreinte digitale, **caractérisé par** au moins un second capteur de ligne (11, 11') d'une seconde technologie pour détecter un second ensemble de caractéristiques d'un segment de ligne du bout d'un doigt, ledit au moins second capteur de ligne étant connecté de façon opérationnelle à ladite unité de commande (12) et ledit second ensemble de caractéristiques étant différent dudit premier ensemble de caractéristiques.

8. Dispositif selon la revendication 7, dans lequel deux capteurs de ligne sont utilisés et l'un ou l'autre du premier capteur de ligne et du second capteur de ligne est un capteur thermique et le capteur restant est un capteur capacitif.

9. Dispositif selon la revendication 7, dans lequel deux capteurs de ligne sont utilisés et le premier capteur de ligne et le second capteur de ligne sont intégrés sur une seule puce de silicium.

10. Dispositif selon la revendication 7, dans lequel deux capteurs de ligne sont utilisés et le premier capteur de ligne et le second capteur de ligne sont intégrés sur une seule puce de silicium conjointement avec un microcontrôleur et des moyens de mémoire.

11. Dispositif selon la revendication 7, dans lequel le premier capteur de ligne est un capteur thermique qui est thermiquement connecté à des moyens de chauffage, un second capteur de ligne est connecté de façon opérationnelle auxdits moyens de chauffage et dans lequel les moyens de chauffage sont activés par le bout d'un doigt en contact avec le second capteur de ligne.

12. Dispositif selon la revendication 7, dans lequel le premier capteur de ligne est un capteur thermique qui est thermiquement connecté aux moyens de chauffage et dans lequel un dispositif sensible à la pression est connecté de façon opérationnelle aux moyens de chauffage pour activer les moyens de chauffage lorsque le bout d'un doigt exerce une pression sur le dispositif sensible à la pression.

*Fig. 1*

*Fig. 2*

*Fig. 3*

*Fig. 4*

### Fig. 5

### Fig. 6

Image

Search area $\overrightarrow{i,j}$

Template $\overrightarrow{x,y}$

### Fig. 7

### Fig. 8

Fig. 9

Fig. 10